# EUROPEAN PATENT APPLICATION

(11) **EP 3 112 014 A1**
(43) Date of publication of application: **04.01.2017**
(21) Application number: 15174552.8
(22) Date of filing: 30.06.2015
(51) Int. Cl.: B01J 8/06, B01J 8/00

(54) **METHOD OF LOADING A PARTICULATE MATERIAL INTO A REACTOR**

(71) Applicant: Shell Internationale Research Maatschappij B.V., 2596 HR Den Haag (NL)
(72) Inventor:
(74) Representative: Matthezing, Robert Maarten

(57) **Abstract**

The invention relates generally to a method of loading a particulate material into a reactor and to a reactor filled with such material. More particularly the invention relates to a method of loading a catalyst into a reactor and to a reactor filled with such catalyst.

## Description

### Field of the invention

### Field of the invention

The invention relates generally to a method of loading a particulate material into a reactor and to a reactor filled with such material. More particularly the invention relates to a method of loading a catalyst into a reactor and to a reactor filled with such catalyst.

### Background of the invention

Chemicals are often manufactured on an industrial scale by reaction in large industrial catalytic reactors. A type of industrial catalytic reactor often used is provided with a multitude of vertically arranged, parallel reaction tubes partially or fully filled with catalyst particles during operation. Chemical reactants are passed thorough the reaction tubes to contact the catalyst for reaction. Such reactors are often referred to as multi-tube reactors. These types of reactors are known and are described in patent publications GB3223490 and US6409977.

Multi-tube reactors are used for highly exothermic reactions. While the cross-sections of the reactor tubes are relatively small (such as 20-50 mm), their length can vary from 1.5 to 20 meters. A multi-tube reactor may contain up to several thousands or even tens of thousands of substantially vertical reactor tubes inside its shell.

Loading a catalyst into a large number of reactor tubes in a multi-tube reactor is both, time consuming and arduous. An even distribution of the catalyst particles inside each tube and between all tubes is very important but difficult to achieve. This leads to excessive down-time of expensive reactor or complete plants and also to possible errors in filling, leading to poor quality reactions and products.

Careful loading of the catalyst particles into the reactor tubes is essential to ensure that the catalyzed reaction proceeds as desired. In particular, it is necessary to achieve the correct loading density of particles within a reactor tube to make sure that each reactor tube has a similar catalyst inventory.

Additionally, when loading a multi-tube reactor with a catalyst it is of high importance that all tubes have the same flow resistance. A variation in resistance among the tubes will cause a variation of flow which will result in a variation of contact time. This may have consequences for the activity, selectivity and stability of the catalyst as well as for the overall process yield.

The resistance of a tube filled with catalyst is determined a.o. by the void fraction. For extrudate particles this parameter is strongly dependent of the average particle length. Catalyst particles with a high average particle length will yield higher voids and lower resistance.

To create a low variation in resistance between the tubes in one reactor it is important to keep the same average particle length (APL) in each tube.

Catalysts are typically shipped in so-called big bags. Flexible Intermediate Bulk Containers (FIBC), commonly known as big bags, are an economical and efficient way to package, store and handle products. Each big bag has four loop handles on each end for easy handling, filling, and dispensing. Dependent on the size, big bags can hold approximately 2000-3500 lbs. of material.

As a result of various causes there may be local variations of the APL within each big bag. Also there may be variations of the APL between the various big bags that are to be loaded into the reactor. On top of that during the unloading of a big bag segregation effects occur, which also may cause a variation in the APL.

When loading a multi-tube reactor, these intra-big bag variations, inter-big bag variations and segregation effects may result in variations in the APL of the catalyst as loaded in different tubes, which can lead to undesired tube-to-tube resistance variations in the reactor.

In order to reduce these variations ultimately affecting the overall efficiency of the process, several procedures have been adopted. They involve either the implementation of extra quality controls during the manufacture of the catalyst to avoid fluctuations of the APL during production, the adoption of special precautions during the filling of the big bag to avoid the creation of APL profiles, or having special care during transport and handling of the big bags to avoid crushing of the particles resulting in an APL profile within the big bag.

A conventionally used method of loading a catalyst into a reactor is by template loading. In such a method a large custom template is provided. The template forms a grid of holes with spacing that matches the layout of the reactor tube ends in the tube sheet. The template is laid over the tube sheet of the reactor. Catalyst is poured onto the template and is loaded into the reactor tube ends by sweeping the catalyst over the template.

US3223490 discloses a method of loading multi-tube reactor with a granular catalyst comprising the step of positioning a perforated plate resting on the reactor tubes, the perforations corresponding to the pattern and spacing of the reactor tubes. Similar methods are also described in EP0963785 and WO2013/160310.

None of the prior art methods for loading a catalyst into a multi-tube reactor provides a satisfactory solution to the problem created by the variations in the APL, which can lead to undesired tube-to-tube resistance variations in the reactor.

In view of the above, there remains a need for an improved method of loading a particulate catalyst into a multi-tube reactor.

### Summary of the invention

The present invention provides a method of loading a particulate catalyst into a reactor that minimizes undesired tube-to-tube resistance variations by a measure that is applied while unloading the big bags.

Further, the invention provides a solution to reduce variations in the catalyst properties between tubes. In particular this is the case for variations in the catalyst activity or variations in catalyst loading properties.

The present invention provides a method of loading a catalyst into a reactor comprising the steps of:
a)opening and unloading at least two containers filled with the catalyst, wherein each container contains a different batch of catalyst and wherein the unloading of the at least two containers does not start at the same time; and
b)simultaneously loading the catalyst originally contained in said at least two containers into the reactor

The present invention also provides a multi-tube reactor consisting of a plurality of reactor tubes filled with a catalyst using the method of the invention.

### Detailed description of the invention

When loading the reactor, at least two big bags are opened and unloaded in such a way that the unloading of one big bag will be asynchronous with the unloading of the second big bag. Such a procedure allows to statistically minimize any variation in the particle size that could exist within and between each of the big bags. Any systematic variation (e.g. the standard profile and segregation profile) of particles size within each big bag is reduced because when particles with a low APL (average particle length) are exiting one bag this will be compensated by the relatively larger particles exiting the other big bag.

The method of the invention is typically applied to loading the catalyst particulate into a multi-tube reactor. However, the benefits derived from using said method can also be applied to loading other types of reactors, like packed bed reactors (also called bulk bed reactors) or a guard bed reactor.

The catalyst loaded by using the method of the invention is a heterogeneous catalyst, typically a catalyst consisting of extrudate particles.

In one embodiment of the invention the catalyst particles possess lobular shape. In a preferred embodiment, the shape of the catalyst particles is trilobular.

The particle size of the catalyst plays an important role in the filling and compaction of the catalyst within the tubes, which ultimately affects the process performance of the reactor itself. The average particle size can be determined by any of the methods known in the art for that purpose, which includes, but are not limited to, image analysis, dynamic light scattering and microscopy.

In one embodiment of the invention the catalyst particles have an average particle size of up to 30 mm. In a preferred embodiment of the invention the particle size is in the range between 2 and 20 mm, more preferably between 2 and 10 mm.

In one embodiment of the invention the catalyst is contained in big bags. Other catalyst containers can also be used with the method of the invention, typically octabins, drums and the like. In still a further embodiment, the election of big bags and/or containers can be based on the APL characteristics of the catalyst.

In one embodiment of the invention at least two big bags are opened and unloaded into a sieve. The catalyst thus unloaded is subsequently transferred to the reactor or tube loading system. In an embodiment the tube loading system comprises multiple exits for loading multiple reactor tubes simultaneously.

The sieving operation has the advantage of removing the dust and fines accompanying the catalyst particles. Although the catalyst material is typically sieved to remove dust at the point of manufacture or dispatch, not all dust can be removed and new dust and fines are unavoidably generated due to particle attrition during transport and handling. Dust and fines are a problem because they can pollute the working environment for the personnel, they can adversely affect the catalytic reaction in the vessel by increasing the density of packing and by blocking the reactant flow, and they can pollute the reaction product.

In one embodiment of the invention the catalyst particles from the at least said two containers are discharged through hoppers having each an asymmetric configuration. A hopper with asymmetric configuration is used in the present application to refer to a hopper having a first substantially vertical wall and a second wall forming an angle with the first one. The fact that each hopper has a vertical wall facilitates placing two hoppers next to each other. As a result, they can be advantageously used for the dual unloading of two containers filled with catalyst.

By using a hopper with the aforementioned asymmetric configuration potential dispersions of the average particle length within a big bag (i.e. intra big bag variations) are advantageously reduced.

Each asymmetric hopper can contain the inventory of more than a single big bag, typically 1.5 to 2 big bags. The asymmetric hoppers spread out the discharge of the inventory of the big bags over a long time. The deliberate wide distribution of particle residence time in the asymmetric hopper, and the large inventory, contribute both to reducing intra- and inter-big bag variations of particles properties.

Furthermore, by opening and unloading at least two big bags in an asynchronous manner through hoppers with the characteristics referred to above, any statistical variation in the APL between big bags (i.e. inter big bag variations) is also advantageously reduced.

Accordingly, all the reactor tubes filled with catalyst using the method of the invention possess essentially similar APL. As a result, the risk of tube-to-tube resistance variations in the reactor is reduced.

In another embodiment of the invention the asymmetric hoppers are fitted with outlet valves, like butterfly-type discharge valves, to control the discharge flow of catalyst leaving the hoppers. In a further embodiment, said outlet valves control the discharge flow of catalyst into the sieve.

Another embodiment of the invention is defined by a multi-tube reactor consisting of a plurality of reactor tubes filled with a catalyst using the method described above. Such a multi-tube reactor can be advantageously used in a variety of catalytic processes, wherein high operational efficiency is required, because it has significantly low tube-to-tube resistance variations.

The method of the invention has the advantages of reducing the pressure drop variations between tubes in the reactor. Further, it reduces the risk of the tubes being clogged, which translates into an easier offloading of the product and catalyst from the reactor once the reaction is completed. Consequently, a more efficient and economically viable process is achieved.

### Description of the drawing

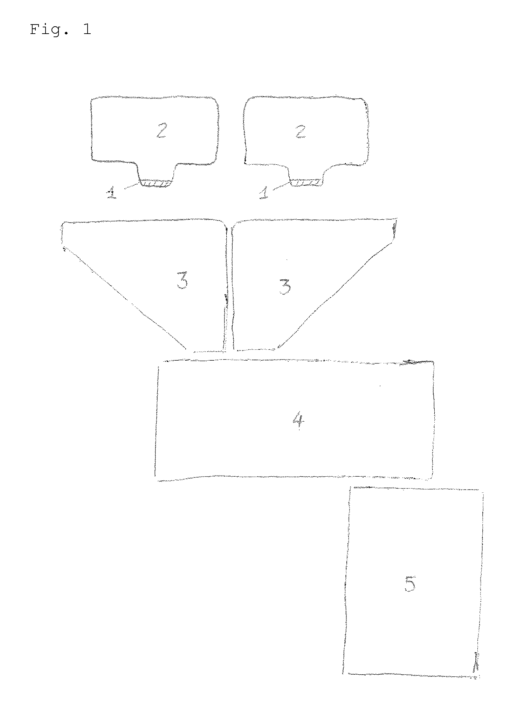

Figure 1 represents a schematic design according to a typical embodiment of the invention. Upon release of their opening systems (1), the contents of two big bags (2) are asynchronous unloaded through two hoppers with asymmetric configuration (3) into a sieve (4). After sieving, the catalyst particles are subsequently transferred to the multi-tube reactor (5).

### Example

In a typical operation example two big bags containing the catalyst are hoisted with the aid of a lifting platform and suspended on top of two hoppers with their opening units facing said hoppers. The big bags are opened at different times by operators, so that their content is asynchronous unloaded through the hoppers into the sieve. The hoppers possess one wall, which is substantially vertical, while the other forms an angle with the former. The hoppers are placed next to each other, in such a manner where their respective vertical walls are facing each other. The contents of the two big bags are transferred into the sieve, wherein the dust and fines are removed. The catalyst particles contained in the sieve are subsequently transferred to the multi-tube reactor through another hopper placed on top of the reactor.

The skilled person would readily understand that all the embodiments described in the present application can be used in any possible combination. Other combinations with well-known equivalent embodiments found in the art are also possible.

While the invention has been described in terms of what are presently considered to be the most practical and preferred embodiments, it is to be understood that the disclosure need not be limited to the disclosed embodiments. It is intended to cover various modifications, combinations and similar arrangements included within the spirit and scope of the claims, the scope of which should be accorded the broadest interpretation so as to encompass all such modifications and similar structures. The present disclosure includes any and all embodiments of the following claims.

It should also be understood that a variety of changes may be made without departing from the essence of the invention. Such changes are also implicitly included in the description. They still fall within the scope of this invention. It should be understood that this disclosure is intended to yield a patent covering numerous aspects of the invention both independently and as an overall system and in both method and apparatus modes.

Any patents, publications, or other references mentioned in this application for patent are hereby incorporated by reference. In addition, as to each term used, it should be understood that unless its utilization in this application is inconsistent with such interpretation, common dictionary definitions should be understood as incorporated for each term and all definitions, alternative terms, and synonyms such as contained in at least one of a standard technical dictionary recognized by artisans.

By virtue of this reference the subject-matter of the appended claims also forms part of the present description.

## Claims

1. A method of loading catalyst particles into a reactor comprising the steps of:
a) opening and unloading at least two containers each filled with catalyst particles, wherein the unloading of the at least two containers does not start at the same time; and
b) simultaneously loading the catalyst originally contained in said at least two containers into the reactor.

2. The method according to claim 1, wherein the reactor is a multi-tube reactor.

3. The method according to any of the preceding claims further comprising a step (a1) of unloading the at least two containers of step (a) into a sieve prior to step (b).

4. The method according to any of the preceding claims,
wherein the catalyst is a heterogeneous catalyst.

5. The method according to any of the preceding claims,
wherein the catalyst consists essentially of extrudate particles.

6. The method according to any of the preceding claims,
wherein the catalyst is in the form of lobular particles.

7. The method according to claim 6, wherein the lobular particles are trilobular.

8. The method according to any of the preceding claims,
wherein the catalyst has an average particle length of up to 30 mm.

9. The method according to any of the preceding claims,
wherein the containers are big bags.

10. The method according to any of the preceding claims,
wherein hoppers with asymmetric configuration are used.

11. The method according to claim 10, wherein the hoppers are fitted with outlet valves to control the discharge flow of catalyst.

12. The method according to claim 11, wherein the outlet valves control the discharge flow of the catalyst into the sieve.

13. The method according to any of the preceding claims to reduce intra-big bag, inter-big bag and segregation variations in the properties of the catalyst.

14. A method to reduce undesired tube -to -tube resistance variations in a multi-tube reactor using a method according to claim 1.

15. A multi-tube reactor consisting of a plurality of reactor tubes filled with a catalyst using the method defined in any of claims 1 to 12.
